# EUROPÄISCHE PATENTSCHRIFT

(11) **EP 1 051 302 B1**
(45) Veröffentlichungstag und Bekanntmachung des Hinweises auf die Patenterteilung: **02.07.2003**
(21) Anmeldenummer: 99910168.6
(22) Anmeldetag: 30.01.1999
(51) Int. Cl.: B60C 23/00

(54) **VORRICHTUNG UND VERFAHREN ZUR EINSTELLUNG DES REIFENDRUCKS AN EINEM FAHRZEUG**
DEVICE AND METHOD FOR ADJUSTING THE TIRE PRESSURE ON A VEHICLE
DISPOSITIF ET PROCEDE POUR LE REGLAGE DE LA PRESSION DES PNEUS D'UN VEHICULE

(30) Priorität: 04.02.1998 DE 19804249
(43) Veröffentlichungstag der Anmeldung: 15.11.2000
(73) Patentinhaber: DEERE & COMPANY, 68163 Mannheim (DE)
(72) Erfinder: KIS, Janos, D-68159 Mannheim (DE)
(74) Vertreter: Lau-Loskill, Philipp, Dipl.-Phys.
(86) Internationale Anmeldenummer: EP9900613
(87) Internationale Veröffentlichungsnummer: WO99039928

(56) Entgegenhaltungen:
- FR-A- 1 247 604
- US-A- 5 263 524
- US-A- 5 674 332

## Beschreibung

Die Erfindung bezieht sich auf eine Vorrichtung gemäß den Merkmalen des Oberbegriffs des Patentanspruchs 1. Die Erfindung bezieht sich desweiteren auf ein Verfahren zur Druckeinstellung gemäß den Merkmalen des Oberbegriffs des Patentanspruchs 13.

Die FR-A-1 247 604 zeigt die Merkmale des Oberbegriffs des Anspruchs 1; die Merkmale des Anspruchs 13 sind aus der US-A-5 674 332 bekannt.

Vorrichtungen und Verfahren zur Einstellung des Reifendrucks werden insbesondere in der Landwirtschaft eingesetzt, um landwirtschaftliche Fahrzeuge wie beispielsweise Traktoren an die jeweiligen Einsatzbedingungen anpassen zu können. Mit steigender Leistungsfähigkeit der landwirtschaftlichen Fahrzeuge werden diese für immer größere Gesamtgewichte entwickelt. Um die daraus resultierende Bodenverdichtung mit ihren unerwünschten Nebenwirkungen zu vermindern, können an den Fahrzeugen Vorrichtungen zur Einstellung des Reifendrucks vorgesehen sein, die beispielsweise den Reifendruck bei der Feldarbeit gegenüber dem Druck bei der Straßenfahrt vermindern.

Die EP-B1-0 164 917 zeigt ein zentrales Reifenbefüllungssystem mit Steuerungsmitteln und einer Radventilanordnung. Die Steuerungsmittel stellen einen Eingangsdruck für einen ersten Anschluß eines Druckentlastungsventils bereit. Das Druckentlastungsventil enthält einen zweiten sich zur Atmosphäre öffnenden Anschluß und einen dritten Anschluß, der über eine Verbindungsleitung und eine Drehdurchführung mit einer mitrotierenden Reifenventilanordnung verbunden ist. Der erste Anschluß und der dritte Anschluß des Druckentlastungsventils sind verbunden, wenn der Eingangsdruck den Druck an dem dritten Anschluß übersteigt. Der dritte Anschluß ist mit dem Entlüftungsanschluß verbunden, wenn der Druck an dem dritten Anschluß den Eingangsdruck übersteigt. Die Radventilanordnung steht mit einem aufblasbaren Reifen in Verbindung. Sie ermöglicht einen Durchfluß, wenn an ihrer Eingangsseite ein Druck ansteht, der einen ersten Referenzdruck übersteigt und wenn der Druck in dem Reifen über einem minimalen Radreferenzdruck liegt. Eine Entlüftung des Reifens erfolgt über das vor der Drehdurchführung liegende Druckent-lastungsventil. Das System muß hierzu mit einem Entlüftungsdruck beaufschlagt werden, damit die Radventilanordnung ihre geöffnete Stellung einnimmt. Dieser Entlüftungsdruck wirkt der eigentlichen Entlüftung der Druckkammer entgegen, was den Entlüftungsvorgang behindert. Darüber hinaus wirkt auch der weit von der Druckkammer entfernt liegende Entlüftungsanschluß verlangsamend und behindernd auf den Entlüftungsvorgang.

Die DE-OS-38 36 105 zeigt eine Reifendruckregelanlage für geländegängige Kraftfahrzeuge bestehend aus einer stationären Ventilkombination, pro Rad je einer Drehdurchführung für eine Druckluft-Versorgungsleitung sowie für eine Steuerleitung und pro Rad je einer mitrotierenden Ventilkombination. Die stationäre Ventilkombination umfaßt ein Relaisventil, wenigstens ein Vorsteuerventil und ein Schließdrucksteuerventil. Die mitrotierende Ventilkombination umfaßt ein Radsteuerventil, welches durch einen Druckimpuls auf der Versorgungsleitung geöffnet und durch den Steuerdruck auf der Steuerleitung geschlossen wird, und ein diesem vorgeschaltetes Schnellöseventil, welches für das Abblasen der Reifenluft zuständig ist. Der Abblasöffnung des Schnellöseventils kann ein Rückschlagventil nachgeschaltet sein. Bei dieser Ausführungsform muß sowohl die Steuerleitung als auch die Versorgungsleitung mittels einer Drehdurchführung mit dem Radsteuerventil verbunden werden. Dies ist aufwendig und teuer.

Die FR-A-1,247,604 offenbart ein Reifenbefüllungssystem durch das der Druck in den Reifen eines Fahrzeugs einzeln oder gemeinsam verändert werden kann. Das System umfaßt eine Druckquelle, eine manuelle Steuerung, einen Druckmesser und mehrere Ventile und Leitungen, wobei den Reifen jeweils ein Schieberventil zugeordnet ist, daß geschlossen ist, wenn in dem System kein bzw. ein niedriger Druck ansteht, über das der Reifen mit der Druckquelle verbunden wird, wenn ein erster, höherer Druck ansteht, und über das der Reifen entlüftet wird, wenn in dem System ein zweiter Druck ansteht, der den ersten Druck übersteigt.

Die US-A-5,647,927 zeigt ein zentrales Reifenbefüllungssystem mit einem digitalen Computer, der einen optimalen Luftdruck für die Reifen eines Fahrzeug beispielsweise zur Minimierung des Kraftstoffverbrauchs sowie Reifenverschleißes bestimmt und an ein Luftversorgungssystem ein Ausgangssignal übermittelt, um den Reifendruck an diesen optimalen Reifendruck anzupassen.

Das durch die Erfindung zu lösende Problem wird in dem komplizierten Aufbau der bekannten Reifenbefüllungssysteme und der zeitaufwendigen Entlüftung gesehen.

Das Problem wird erfindungsgemäß durch die Lehre der Patentansprüche 1 bzw. 13 gelöst. Weitere vorteilhafte Ausgestaltungen und Weiterbildungen der Erfindung gehen aus den Unteransprüchen hervor.

Die erfindungsgemäße Vorrichtung zur Einstellung des Druckes in wenigstens einem Reifen eines Fahrzeugs beinhaltet eine pneumatische Steuerungseinheit, einen Drucksensor, eine Drehdurchführung und eine mitrotierende Radventilanordnung mit verschiedenen Stellungen. Die Vorrichtung ist mit einer Drückluftquelle verbunden und die Steuerungseinheit steht über eine Verbindungsleitung und die Drehdurchführung mit der Radventilanordnung, deren jeweilige Stellung vom Druckniveau in der Verbindungsleitung abhängt, in Verbindung. Die Radventilanordnung weist zumindest eine Schließstellung, eine Durchströmstellung sowie eine zur Umgebungsluft öffnende Entlüftungsstellung auf. Die Radventilanordnung nimmt ihre Durchströmstellung ein, sofern in der Verbindungsleitung ein Belüftungsdruck ansteht. Sie nimmt ihre Entlüftungsstellung ein, sofern in der Verbindungsleitung ein Druck ansteht, der den Belüftungsdruck zumindest um einen vorbestimmten Wert übersteigt, und sie nimmt ihre Schließstellung ein, sofern in der Verbindungsleitung ein Schließdruck ansteht, der um mindestens einen vorbestimmten Druckdifferenzwert unter dem Belüftungsdruck liegt. Erfindungsgemäß weißt die pneumatische Steuereinheit wenigstens ein Hochdruckventil und ein Mitteldruckventil aufweist, die in parallelen Strängen zwischen der Druckluftquelle und einer Druckniveauleitung angeordnet und jeweils zwischen einer Sperrstellung und einer Durchströmstellung umschaltbar sind. In dem Strang des Mitteldruckventils ist ein Druckreduzierungsventil angeordnet, welches den Belüftungsdruck einstellt. Der durch das Druckreduzierungsventil eingestellte Druck ist größer als der maximal erforderliche Belüftungsdruck der Reifen, jedoch kleiner als der Druck der notwendig ist, um die Radventilanordnung in ihre Entlüftungsstellung zu bringen. Sofern die Druckniveauleitung mit der Verbindungsleitung in Verbindung steht, nimmt die Radventilanordnung ihre Entlüftungsstellung ein, wenn das Hochdruckventil geöffnet ist. Sie nimmt ihre Durchströmstellung ein, wenn das Mitteldruckventil geöffnet ist, und die Radventilanordnung mit dem durch das Druckreduzierungsventil verringerten Druck belastet wird.

Die Entlüftung erfolgt direkt am Rad, wodurch die zur Entlüftung benötigte Zeit verkürzt wird. Es muß nur eine Leitung durch die Drehdurchführung geführt werden, da die Ansteuerung der Radventilanordnung ausschließlich durch den Druck in der Verbindungsleitung und nicht durch eine zusätzliche Steuerleitung erfolgt.

Die erfindungsgemäße Vorrichtung ermöglicht eine schnelle Modifizierung der Grenzwerte beim Reifenwechsel und die Berücksichtigung der Belastung. Sie bietet insbesondere dann Vorteile, wenn der Reifendruck häufig verändert wird, um ihn abhängig von den Arbeitsbedingungen der Radlast und der aktuellen Fahrgeschwindigkeit nach den Vorgaben des Reifenherstellers optimal und stufenlos einzustellen. Die aktuellen Reifendruckgrenzwerte können beim Reifenwechsel entweder vom Fahrer oder einem in den Reifen eingebauten geeigneten Transponder aktualisiert werden. Die aktuelle Belastung des Reifens kann sich aus der Einfederung des Fahrzeugs ergeben.

Soll der Druck an mehreren Reifen des Fahrzeugs einstellbar sein, so werden diese Reifen vorzugsweise mit einer gemeinsamen stationären pneumatischen Steuerungseinheit verbunden. Hierdurch läßt sich die Anzahl der Bauteile reduzieren. Die pneumatische Steuerungseinheit ist vorzugsweise ein modular ausgebildeter Ventilblock.

Eine bevorzugte Weiterbildung der erfindungsgemäßen Vorrichtung sieht vor, daß durch die stationäre pneumatische Steuerungseinheit nicht nur der Druck der Reifen eines Fahrzeugs, sondern auch der Druck der Reifen eines oder mehrerer mit dem Fahrzeug verbundener Geräte oder Anhänger einstellbar ist.

Es ist vorteilhaft, die pneumatische Steuerungseinheit stationär an dem Fahrzeug anzubringen. Hiermit kann eine Einstellung des Druckes zu jeder Zeit erfolgen, ohne daß eine externe Steuerungsanlage angefahren werden muß. Eine an dem Fahrzeug angebrachte pneumatische Steuerungsanlage läßt sich in vorteilhafter Weise zur Druckeinstellung eines mit dem Fahrzeug verbundenen Anhängers bzw. Gerätes verwenden. Beim Anhängen bzw. beim Wechseln von Anhängern müssen nur die jeweiligen Leitungen angeschlossen werden und es fallen keine zusätzlichen aufwendigen Umbauarbeiten an.

Vorteilhaft ist es, die Radventilanordnung in Form eines Schieberventils auszuführen. Das Schieberventil wird in Abhängigkeit vom Druck in der Verbindungsleitung in seine jeweilige Stellung gebracht. Schieberventile sind einfach im Aufbau und strömungsunempfindlich. Sie werden häufig angewendet und sind daher kostengünstig.

In vorteilhafter Weise wird die Radventilanordnung durch eine Feder belastet, die der Wirkung des die Radventilanordnung steuernden Luftdrucks in der Verbindungsleitung entgegenwirkt. Durch die Auslegung der Feder lassen sich die Umschaltdruckpunkte der verschiedenen Ventilstellungen definieren.

Vorteilhafterweise beinhaltet die pneumatische Steuerungseinheit mindestens ein Umschaltventil. Dieses weist eine die Verbindungsleitung zur Umgebung öffnende Entlüftungsstellung auf. Befindet sich das Umschaltventil in dieser Stellung wird die Verbindungsleitung drucklos, wodurch sie weniger stark beansprucht wird. Die Radventilanordnung nimmt bei druckloser Verbindungsleitung in vorteilhafter Weise ihre Schließstellung ein, so daß kein Druckabbau vom Reifen über die Radventilanordnung erfolgt.

Es ist günstig, wenn die pneumatische Steuerungseinheit wenigstens ein Umschaltventil aufweist, das zwischen einer Druckniveauleitung der Steuereinheit und der Verbindungsleitung liegt. Das Umschaltventil ist zwischen einer Entlüftungsstellung und einer Durchströmstellung umschaltbar. In der Entlüftungsstellung wird die Verbindungsleitung entlüftet und damit entlastet. Gleichzeitig wird die Druckniveauleitung abgesperrt, so daß ihr Druck aufrechterhalten bleibt. In der Durchströmstellung wird die Verbindungsleitung mit der Druckniveauleifcung verbunden.

In vorteilhafter Weise stehen die Reifen wenigstens einer Achse des Fahrzeugs und/oder eines angehängten Geräts oder eines Anhängers jeweils über zugehörige Radventilanordnungen und Drehdurchführungen mit nur einer der Achse zugeordneten Verbindungsleitung in Verbindung. Die Verbindungsleitung ist über ein zugehöriges Umschaltventil mit einer Druckniveauleitung der pneumatischen Steuerungseinheit verbindbar. Die Einstellung des Druckes in den Reifen einer Achse erfolgt bei dieser Ausführungsform gemeinsam, wodurch in allen Reifen einer Achse der gleiche Druck eingestellt wird. Dies ist vorteilhaft, da die Reifen einer Achse üblicherweise den gleichen Belastungen ausgesetzt sind. Darüber hinaus wird die Anzahl der die pneumatische Steuereinheit bildenden Einzelteile verringert.

Um eine Steuerung und Überwachung und insbesondere eine Fernsteuerung und Fernüberwachung der Vorrichtung z.B. vom Fahrerstand eines Fahrzeugs aus zu ermöglichen, ist es von Vorteil, die Umschaltventile und/oder das Hochdruckventil und/oder das Mitteldruckventil als Magnetventile auszubilden und durch eine elektrische oder elektronische Einheit zu steuern.

Die Umschaltventile und/oder das Hochdruckventil und/oder das Mitteldruckventil nehmen im stromlosen Zustand vorzugsweise ihre Sperrstellung ein. Bei den Umschaltventilen entspricht die Sperrstellung vorzugsweise gleichzeitig der Entlüftungsstellung für die Verbindungsleitung. Dadurch befindet sich die Radventilanordnung im stromlosen Zustand in ihrer Schließstellung, wodurch die Reifen im Falle eines Energieausfalls nicht entlüftet werden.

Vorzugsweise werden durch eine elektrische oder elektronische Einheit die durch einen Drucksensor in einer Druckniveauleitung erfaßten Daten verarbeitet. Dadurch ist es möglich, daß die elektrische oder elektronische Einheit einen zum Erreichen eines vorgewählten oder erforderlichen Drucks notwendigen Ent- bzw. Belüftungsvorgang automatisch ausführt.

Durch eine elektrische oder elektronische Einheit kann die Radventilanordnung in die jeweils gewünschte Stellung zur Entlüftung und Belüftung bzw. in die Schließstellung gebracht werden. Die elektrische oder elektronische Einheit läßt darüber hinaus eine Überwachung und den Test der Radventilanordnung zu. Sie ermöglicht die gesteuerte Druckeinstellung und Drucküberwachung mehrerer Radventilanordnungen.

Das erfindungsgemäße Verfahren zur Einstellung des Drucks in mindestens einem Reifen bedient sich vorzugsweise der beschriebenen erfindungsgemäßen Vorrichtung. An die Reifenventilanordnung wird kurzzeitig ein Belüftungsdruck angelegt, um die Radventilanordnung in ihre Durchströmstellung zu bringen. Hierauf wird der Ist-Druckwert des Reifens in der Verbindungs-leitung gemessen. Aus einem Vergleich zwischen Ist-Druckwert und einem vorgebbaren Soll-Druckwert wird eine Belüftungsdauer bestimmt. Anschließend wird der Belüftungsdruck bzw. der Entlüftungsdruck für die bestimmte Dauer an die Radventilanordnung angelegt, um eine Belüftung oder Entlüftung des Reifens vorzunehmen. Die Verfahrensschritte werden durch eine elektronische Einheit gesteuert, in der ein anfänglicher, vorgebbarer funktioneller Zusammenhang zwischen Ist-Soll-Differenz und Belüftungsdauer bzw. Entlüftungsdauer gespeichert ist. Dieser gibt das Strömungsverhalten bzw. die Parameter der Vorrichtung wieder. Der funktionelle Zusammenhang wird unter Berücksichtigung der anfänglichen Ist-Soll-Differenz und der Summe der einzelnen Belüftungsdauern bzw. Entlüftungsdauern abgeändert, um ihn an die konkreten Verhältnisse, wie insbesondere an die tatsächlichen Strömungseigenschaften und Reifenparametern anzupassen. Die genannten, Verfahrensschritte gewährleisten eine Anpassung des Systems an Veränderungen der Stromungseigenschaften und Reifenparameter. Darüber hinaus ist es möglich, den Reifendruck je nach den wechselnden Straßenbedingungen, Radlast und Geschwindigkeit zu bestimmen und einzustellen. Dieses Verfahren ermöglicht eine genaue und schnelle Einstellung des Reifendrucks.

Es ist vorteilhaft, die genannten Verfabrensschritte wiederholt auszuführen, bis der IST-Druckwert innerhalb eines vorgebbaren Toleranzbereichs liegt, wobei eine iterative Annäherung an den erforderlichen Druck erfolgt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Darstellung einer erfindungsgemäßen Vorrichtung für ein Fahrzeug mit vier Reifen und
- Fig. 2: ein Diagramm zur Verdeutlichung eines Reifendruckeinstellvorgangs.

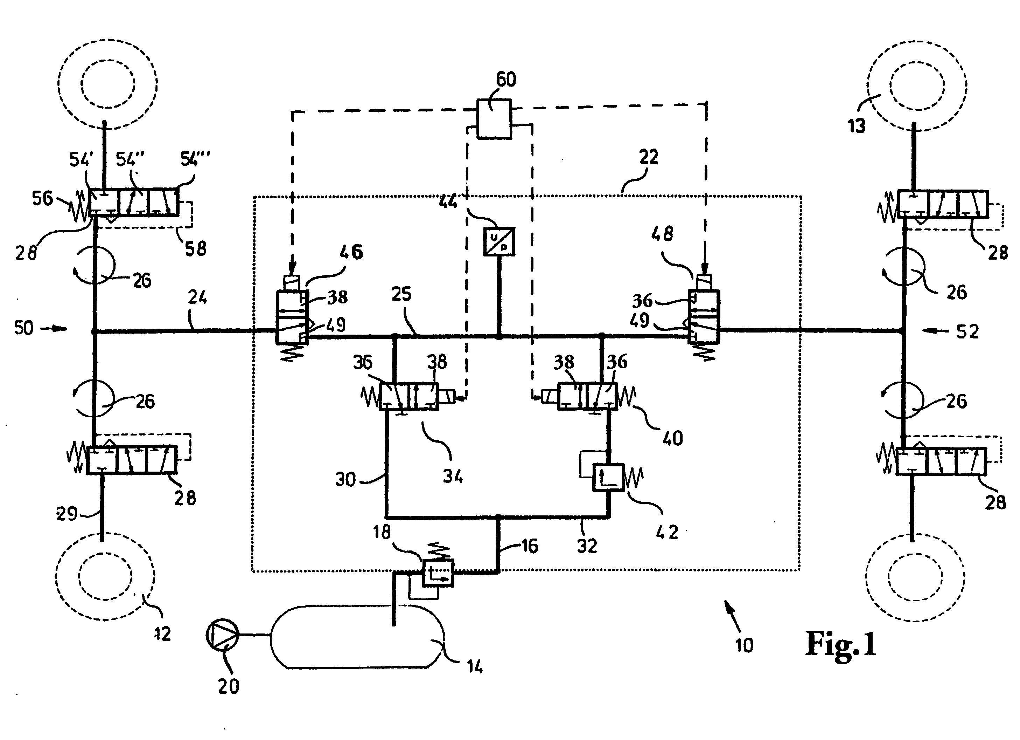

Ein nicht näher gezeigtes Fahrzeug, beispielsweise ein Ackerschlepper, ist mit einer Vorrichtung 10 zur Einstellung des Druckes in seinen Reifen 12, 13 ausgestattet. Die in Fig. 1 näher dargestellte Vorrichtung 10 enthält eine pneumatische Steuerungseinheit 22, die mit den vier Reifen 12,13 des nicht gezeigten Fahrzeugs über Verbindungsleitungen 24 verbunden ist. Jedem Reifen 12 ist eine Drehdurchführung 26 zugeordnet, die die Verbindungsleitung 24 mit einer mitrotierenden Radventilanordnung 28 verbindet. Jede Radventilanordnung 28 steht über eine Anschlußleitung 29 mit dem Inneren des zugehörigen Reifens 12, 13 in Verbindung. Die Vorrichtung ist mit einem Druckluftbehälter 14 über eine Versorgungsleitung 16, in der ein Überströmventil 18 vorgesehen ist, verbunden. Der Druckluftbehälter 14 wird durch eine Druckluftquelle 20 mit Druckluft versorgt. Bei der Druckluftquelle 20 handelt es sich beispielsweise um einen Kompressor, der die Luftdruckbremsanlage mit höchster Priorität der Bremsen versorgt.

Die pneumatische Steuerungseinheit 22 ist am Fahrzeug stationär befestigt. Die von dem Druckluftbehälter 14 kommende Versorgungsleitung 16 teilt sich in der Steuerungseinheit 22 in zwei Leitungsstränge 30, 32, deren erster Strang 30 ein Hochdruckventil 34 in Form eines federbelasteten Magnetventils mit einer Schließstellung 36 und einer Durchströmstellung 38 beinhaltet. In dem zweiten Strang 32 ist ein Mitteldruckventil 40 in Form eines zweites ebensolches Magnetventils vorgesehen, dem ein Druckreduzierungsventil 42 vorgeschaltet ist. Hinter dem Hochdruckventil 34 und dem Mitteldruckventil 40 sind die beiden Leitungsstränge 30, 32 in eine Druckniveauleitung 25 zusammengeführt. Die Druckniveauleitung 25 steht mit einem Drucksensor 44 in Verbindung. Über zwei gleichartige als federbelastete Magnetventile ausgeführte Umschaltventile 46, 48, die eine Entlüftungsstellung 49 und eine Durchströmstellung 38 aufweisen, führt die Druckniveauleitung 25 zu jeweils einer der Verbindungsleitungen 24, die eine Verbindung zu den Reifen 12 herstellt.

Die Radventilanordnung 28 ist in Form eines Schieberventils mit einer Schließstellung 54', einer Durchströmstellung 54" und einer Entlüftungsstellung 54''' ausgeführt. Der Schieber der Radventilanordnung 28 wird einenends durch die Wirkung einer Feder 56 belastet und durch diese in ihre Schließstellung 54' gedrückt. Andernends ist der Schieber dem Druck in einer Steuerleitung 58 ausgesetzt, welche mit der Verbindungsleitung 24 verbunden ist. Entsprechend dem durch die Steuerungseinheit 22 vorgegeben Druckniveau in der Verbindungsleitung 24 nimmt die Radventilanordnung 28 eine ihrer drei Stellungen 54', 54", 54''' ein.

Die pneumatische Steuerungseinheit 22 steht mit einer elektronischen Einheit 60 in Verbindung, die die Umschaltventile 46, 48, das Mitteldruckventil 40, das Hochdruckventil 34 ansteuert und die Meßwerte des Drucksensors 44 auswertet.

Im folgenden soll nun die Wirkungsweise der dargestellten Vorrichtung beschrieben werden.

Das in der Versorgungsleitung 16 angeordnete Überströmventil 18 öffnet nur dann, wenn in dem Druckluftbehälter 14 ein vorgebbarer Mindestdruck herrscht. Damit wird sichergestellt, daß aus dem Druckluftbehälter 14 nur dann Druckluft entnommen wird, wenn der Druck über dem Mindestdruck zur Versorgung einer Druckluftbremsanlage liegt. Um festzustellen, ob der Druckluftbehälter 14 den zum Betrieb der Vorrichtung notwendigen Betriebsdruck aufweist, läßt sich das Hochdruckventil 34 öffnen. Der Druckluftbehälter 14 wird dadurch mit dem Drucksensor 44 verbunden. Der Drucksensor 44 liefert die ermittelten Daten an die elektronische Einheit 60, um einen Belüftungsvorgang zu unterbinden, wenn kein ausreichender Luftdruck vorhanden ist.

Zur Belüftung der Reifen wird das Mitteldruckventil 40 durch die elektronische Einheit 60 in seine Durchströmstellung 38 gebracht. Desweiteren wird das Umschaltventil 46 zur Belüftung der Reifen 12 der Vorderachse 50 bzw. das Umschaltventil 48 zur Belüftung der Reifen 13 der Hinterachse 52 oder aber auch beide Umschaltventile 46, 48 in ihre Durchströmstellung 38 gebracht. Da vor dem Mitteldruckventil 40 das Druckreduzierungsventil 42 angeordnet ist, steht in der Verbindungsleitung 24 ein gegenüber dem Druck des Druckluftbehälters 14 reduzierter Belüftungsdruck an. Dieser wird über die Verbindungsleitung 24 und die Steuerleitung 58 an den Schieber des Radsteuerventils 28 angelegt, wobei das Radsteuerventil 28 seine Durchströmstellung 54'' einnimmt und der Reifen 12, 13 befüllt wird.

Um die Reifen 12, 13 zu entlüften, wird das Mitteldruckventil 40 geschlossen sowie das Umschaltventil 46 und/oder das Umschaltventil 48 in die jeweilige Durchströmstellung 36 gebracht. Der Betriebsdruck des Luftbehälters 14 steuert hierbei die Radventilanordnung 28 direkt an und bringt sie in ihre Entlüftungsstellung 54'''. Das Innere der Reifen 12, 13 wird dabei direkt zur Atmosphäre hin entlüftet, ohne daß die Entlüftung gegen einen Steuerdruck oder über große Leitungswege erfolgen muß.

Soll der Reifen 12, 13 weder belüftet noch entlüftet werden, so werden alle Magnetventile 34, 40, 46, 48 stromlos gemacht und damit geschlossen. Die Umschaltventile 46, 48 öffnen in dieser Stellung die Verbindungsleitung 24 zur Umgebung, so daß an dem Schieber des Radsteuerventils 28 kein Druck ansteht und dieser sich in die Schließstellung 54' bewegt, in der die Anschlußleitung 29 verschlossen wird.

Zur Kontrolle des Reifendrucks wird zuerst ein kurzer Belüftungsprozess durchgeführt, um die Reifenventilanordnungen 28 in ihre Durchstroms teilung 54'' zu bringen. Daraufhin wird das Magnetventil 40 geschlossen und der Drucksensor 44 mißt den in der Verbindungsleitung 24 anstehenden Druck, der dem Druck in dem Reifen 12, 13 entspricht.

Zwischen den Belüftungs-, Entlüftungs- bzw. Meßvorgängen befinden sich die Umschaltventile 46 bzw. 48 in ihrer Entlüftungsstellung 49, wodurch die Verbindungsleitung 24 mit der Umgebung verbunden ist und damit auch der Bereich der Drehdurchführungen 26 nicht mehr mit Druck belastet ist.

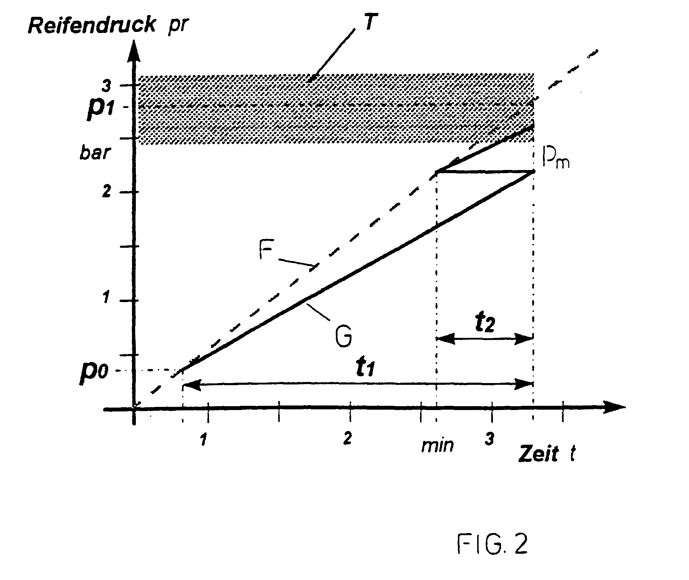

Die Ansteuerung der Magnetventile 34, 40, 46 und 48 in der pneumatischen Steuerungseinheit 22 erfolgt mittels eines in Fig. 2 dargestellten und im folgenden beschriebenen Verfahrens.

Zu bestimmten Zeitpunkten, die entweder durch die elektronische Einheit 60 oder aber auch manuell, beispielsweise durch den Bediener des Fahrzeugs, vorgegeben werden, wird ein Vorgang zur Reifendruckregelung gestartet. Hierzu erfolgt zuerst eine Messung des Drucks p₀ in einem bzw. beiden Reifenpaaren. Hierzu wird an die Reifenventilanordnung 28 kurzzeitig der Belüftungsdruck angelegt (Öffnen der Ventile 40 und 46 bzw. 48). Anschließend wird der Druck p₀ der Reifen 12, 13 in der Verbindungsleitung 24 durch den Drucksensor 44 gemessen. Ausgehend von dem gemessenen Reifendruck stellt die elektronische Einheit 60 fest, ob eine Reifendruckanpassung notwendig ist. Dies ergibt sich aus einem Vergleich zwischen dem Druck p₀ und einem vorgegebenen Druckwert p₁. Weichen die Druckwerte p₀, p₁ voneinander ab, so ermittelt die elektronische Einheit 60 eine Zeitdauer t₁ für einen notwendigen Be- bzw. Entlüftungsvorgang. Der Belüftungsdruck bzw. Entlüftungsdruck wird durch eine entsprechende Ansteuerung der Magnetventile 34, 40, 46, 48 für die errechnete Zeitdauer t₁ an die Radventilanordnung 28 angelegt, so daß eine Belüftung bzw. Entlüftung der Reifen 12, 13 erfolgt. Nach erfolgtem Be- bzw. Entlüftungsvorgang erfolgt eine zweite Druckmessung. Entspricht der gemessene Druckwert pₘ wiederum nicht dem vorgegebenen Druck p₁, so wird der Vorgang wiederholt. Dies wird solange fortgesetzt bis der gewählte Druckwert p₁ erreicht ist. Durch dieses Verfahren erfolgt eine iterative Annäherung an den zu erreichenden Druckwert p₁. Es kann darüber hinaus vorgesehen werden, daß der Vorgang abgebrochen wird, wenn der erreichte Wert innerhalb eines vorgegebenen Drucktoleranzbereichs T liegt oder wenn eine bestimmte Anzahl von Be- bzw. Entlüftungsvorgängen durchgeführt worden ist. Letzteres beendet den Vorgang auch dann, wenn ein Reifen defekt ist und der vorgewählte Druck p₁ nicht erreicht werden kann.

Die beschriebenen Verfahrensschritte werden durch die elektronische Einheit 60 gesteuert, in der ein anfänglicher, theoretischer funktioneller Zusammenhang F zwischen Ist-Soll-Differenz des Drucks in den Reifen 12, 13 und der notwendigen Belüftungsdauer t₁, t₂ bzw. Entlüftungsdauer gespeichert ist. Anhand dieses theoretischen Zusammenhangs F erfolgt die Einstellung der iterativ ausgeführten Belüftungsdauer t₁, t₂ und/oder Entlüftungsdauer. Erreicht der Reifendruck den Drucktoleranzbereich T, so wird der Belüftungsvorgang bzw. der Entlüftungsvorgang beendet. Die elektronische Einheit 60 ermittelt nun aus den Be- und Entlüftungsdauern t₁, t₂ einen tatsächlichen funktionellen Zusammenhang G, der gespeichert wird und anhand dessen spätere Be- und Entlüftungsvorgänge vorgenommen werden. Auf diese Weise wird das Verfahren an die tatsächlichen Strömungsverhältnisse im System angepaßt.

In dem gezeigten Ausführungsbeispiel werden jeweils die beiden Reifen 12 der Vorderachse 50 bzw. die beiden Reifen 13 an der Hinterachse 52 des nicht gezeigten Fahrzeugs gemeinsam angesteuert. Es ist aber auch denkbar, jeden Reifen 12, 13 einzeln oder aber die Reifen 12, 13 des gesamten Fahrzeugs zusammen anzusteuern.

Darüber hinaus ist es möglich, ebenfalls die Reifen eines an das Fahrzeug angekuppelten Anhängers in die Vorrichtung einzubeziehen. Es ist hierbei denkbar, die Reifen des Anhängers beispielsweise einzeln, paarweise oder aber im Verbund mit den Reifen 12 des Fahrzeugs einzustellen.

## Patentansprüche

1. Vorrichtung zur Einstellung des Druckes in wenigstens einem Reifen (12, 13) eines Fahrzeugs mit einer pneumatischen Steuerungseinheit (22), einem Drucksensor (44), einer dem wenigstens einen Reifen (12, 13) zugeordneten Drehdurchführung (26) und mit einer mit dem Reifen (12, 13) mitrotierenden, in verschiedene Stellungen (54', 54'', 54''') einstellbaren Radventilanordnung (28), wobei die Vorrichtung (10) mit einer Druckluftquelle (20) verbunden ist und die Steuerungseinheit (22) über eine Verbindungsleitung (24) und die Drehdurchführung (26) mit der Radventilanordnung (28) in Verbindung steht, deren jeweilige Stellung (54', 54'', 54''') vom Druckniveau in der Verbindungsleitung (24) abhängt, wobei die Radventilanordnung (28) zumindest eine Schließstellung (54'), eine Durchströmstellung (54''), in der eine Verbindung zwischen Steuereinheit (22) und dem wenigstens einen Reifen (12, 13) hergestellt wird, sowie eine den wenigstens einen Reifen (12, 13) zur Umgebungsluft öffnende Entlüftungsstellung (54''') aufweist, und die Radventilanordnung (28) ihre Durchströmstellung (54'') einnimmt, sofern in der Verbindungsleitung (24) ein Belüftungsdruck ansteht, ihre Entlüftungsstellung (54''') einnimmt, sofern in der Verbindungsleitung (24) ein Entlüftungsdruck ansteht, der den Belüffcungsdruck um mindestens einen vorbestimmten Wert übersteigt und ihre Schließstellung einnimmt, sofern in der Verbindungsleitung (24) ein Schließdruck ansteht, der um mindestens einen vorbestimmten Druckdifferenzwert unter dem Belüftungsdruck liegt, **dadurch gekennzeichnet, daß** die pneumatische steuerungseinheit (22) wenigstens ein Hochdruckventil (34) und ein Mitteldruckventil (40) aufweist, die in parallelen Strängen (30, 32) zwischen der Druckluftguelle (20) und einer mit der Verbindungsleitung (24) verbindbaren Druckniveauleitung (25) angeordnet und jeweils zwischen einer Sperrstellung (36) und einer Durchströmstellung (38) umschaltbar sind, und daß wenigstens in dem Strang (32) des Mitteldruckventils (40) ein Druckreduzierungsventil (42) angeordnet ist, welches den Belüftungsdruck einstellt.

2. Vorrichtung nach Anspruch 1, **dadurch gekennzeichnet, daß** die pneumatische Steuerungseinheit (22) mit mehreren Reifen (12, 13) verbunden ist, wobei jedem dieser Reifen (12, 13) eine eigene Drehdurchführung (26) und eine Radventilanordnung (28) zugeordnet ist.

3. Vorrichtung nach einem der Ansprüche 1 oder 2, **dadurch gekennzeichnet, daß** die pneumatische Steuerungseinheit (22) mit wenigstens einem Reifen eines an das Fahrzeug angehängten Gerätes oder Anhängers verbunden ist, um den Druck in diesem Reifen einzustellen.

4. Vorrichtung nach einem der Ansprüche 1 bis 3, **dadurch gekennzeichnet, daß** die pneumatische Steuerungseinheit (22) stationär an dem Fahrzeug angebracht ist.

5. Vorrichtung nach einem der Ansprüche 1 bis 4, **dadurch gekennzeichnet, daß** die Radventilanordnung (28) in Form eines Schieberventils ausgeführt ist, das wenigstens eine Schließstellung (54'), eine Durchströmstellung (54'') und eine Entlüftungsstellung (54''') aufweist.

6. Vorrichtung nach einem der Ansprüche 1 bis 5, **dadurch gekennzeichnet, daß** die Radventilanordnung wenigstens eine Feder (56) aufweist, die dem Luftdruck in der Verbindungsleitung (24) entgegenwirkt und die Umschaltdruckwerte für die verschiedenen Ventilstellungen definiert.

7. Vorrichtung nach einem der Ansprüche 1 bis 6, **dadurch gekennzeichnet, daß** die pneumatische Steuerungseinheit (22) mindestens ein Umschaltventil (46, 48) beinhaltet, das eine die Verbindungsleitung (24) zur Umgebung öffnende Entlüftungsstellung (49) aufweist.

8. Vorrichtung nach einem der Ansprüche 1 bis 7, **dadurch gekennzeichnet, daß** die pneumatische Steuerungseinheit (22) wenigstens ein Umschaltventil (46, 48) aufweist, das zwischen der Druckniveauleitung (25) der Steuereinheit (22) und der Verbindungsleitung (24) liegt und das zwischen einer Entlüftungsstellung (49), in der die Verbindungsleitung (24) entlüftet und die Druckniveauleitung (25) abgesperrt wird, und einer Durchströmstellung (38), in der die Verbindungsleitung (24) mit der Druckniveauleitung (25) verbunden ist, umschaltbar ist. eine Feder (56) auf weist, die dem Luftdruck in der Verbindungsleitung (24) entgegenwirkt und die Umschaltdruckwerte für die verschiedenen Ventilstellungen definiert.

9. Vorrichtung nach einem der Ansprüche 1 bis 8, **dadurch gekennzeichnet, daß** die Reifen (12, 13) wenigstens einer Achse (50, 52) des Fahrzeugs und/oder eines angehängten Geräts oder eines Anhängers jeweils über zugehörige Radventilanordnungen (28) und Drehdurchführungen (26) mit einer der Achse zugeordneten Verbindungsleitung (24) in Verbindung stehen und daß die Verbindungsleitung (24) über ein zugehöriges Umschaltventil (46, 48) mit einer Druckniveauleitung (25) der pneumatischen Steuerungseinheit (22) verbindbar ist.

10. Vorrichtung nach einem der Ansprüche 1 bis 9, **dadurch gekennzeichnet, daß** die Umschaltventile (46, 48) und/oder das Hochdruckventil (34) und/oder das Mitteldruckventil (40) als Magnetventile ausgebildet sind, die durch eine elektrische oder elektronische Einheit (60) ansteuerbar sind.

11. Vorrichtung nach Anspruch 10, **dadurch gekennzeichnet, daß** die Umschaltventile (46, 48) und/oder das Hochdruckventil (34) und/oder das Mitteldruckventil (40) in stromlosen Zustand ihre Sperrstellung (36) einnehmen.

12. Vorrichtung nach einem oder mehreren der Ansprüche 1 bis 11, **dadurch gekennzeichnet, daß** an die Druckniveauleitung (25) der Drucksensor (44) angeschlossen ist, der die erfaßten Druckmeßwerte an eine elektrische oder elektronische Einheit (60) abgibt, welche ihrerseits eine Ansteuerung der Ventile der Steuereinheit (22) in Abhängigkeit des erfaßten Druckniveaus vornimmt.

13. Verfahren zur Einstellung des Drucks in mindestens einem Reifen (12, 13) eines Fahrzeugs mit einer Vorrichtung nach einem der Ansprüche 1 bis 12, wobei an die Reifenventilanordnung (28) kurzzeitig ein Belüftungsdruck angelegt wird und anschließend der Ist-Druckwert (p₀) des Reifens (12, 13) in der Verbindungsleitung (24) gemessen wird, aus einem Vergleich zwischen Ist-Druckwert (p₀) und einem vorgebbaren Soll-Druckwert (p₁) eine Belüftungsdauer (t₁) bzw. eine Entlüftungsdauer (t₂) bestimmt wird und daß anschließend der Belüftungsdruck bzw. der Entlüftungsdruck für die bestimmte Dauer (t₁, t₂) an die Radventilanordnung (28) angelegt wird, um eine Belüftung oder Entlüftung des Reifens (12, 13) vorzunehmen, **dadurch gekennzeichnet, daß** die Verfahrensschritte durch eine elektronische Einheit (60) gesteuert werden, in der ein anfänglicher funktioneller Zusammenhang zwischen Ist-Soll-Differenz und Belüftungsdauer bzw. Entlüftungsdauer (t₁, t₂) gespeichert ist und daß der funktionelle Zusammenhang unter Berücksichtigung der anfänglichen Ist-Soll-Differenz und der Summe der einzelnen Belüftungsdauern bzw. Entlüftungsdauern abgeändert wird.

14. Verfahren nach Anspruch 13, **dadurch gekennzeichnet**, dab die in Anspruch 13 angegebenen Verfahrensschritte wiederholt ausgeführt werden, bis der IST-Druckwert (P₀) innerhalb eines vorgebbaren Toleranzbereich (T) liegt.

## Claims

1. Apparatus for adjusting the pressure in at least one tyre (12, 13) of a vehicle, with a pneumatic control unit (22), a pressure sensor (44), a rotary feed through (26) associated with the at least one tyre (12, 13) and with a wheel valve device (28) rotating with the tyre (12, 13) and which can be positioned in various positions (54', 54", 54"'), wherein the apparatus (10) is connected to a source of compressed air (20) and the control unit (22) is connected to the wheel valve device (28) by a connecting line (24) and the rotary feed through (26), the current position (54', 54", 54''') of the wheel valve device depending on the pressure level in the connecting line (24), wherein the wheel valve device (28) has at least a closed position (54'), a through-flow position (54"), in which a connection is created between the control unit (22) and the at least one tyre (12, 13), as well as a venting position (54"') opening the at least one tyre (12, 13) to the ambient air, and the wheel valve device (28) assumes its through-flow position (54") insofar as an inflation pressure is present in the connecting line (24), assumes its venting position (54''') insofar as a venting pressure is present in the connecting line (24), exceeding the inflation pressure by at least a predetermined value, and assumes its closed position insofar as a closing pressure is present in the connecting line (24), lying by at least a predetermined pressure difference value below the inflation pressure, **characterized in that** the pneumatic control unit (22) comprises at least a high pressure valve (34) and a medium pressure valve (40), which are arranged in parallel lines (30, 32) between the compressed air source (20) and a pressure level line (25) connectible to the connecting line (24) and which can each be switched between a closed position (36) and a through-flow position (38), and **in that** a pressure reducing valve (42) is arranged in at least the line (32) of the medium pressure valve (40) and adjusts the inflation pressure.

2. Apparatus according to claim 1, **characterized in that** the pneumatic control unit (22) is connected to a plurality of tyres (12, 13), wherein an individual rotary feed through (26) and a wheel valve device (28) are associated with each of these tyres (12, 13).

3. Apparatus according to either claim 1 or 2, **characterized in that** the pneumatic control unit (22) is connected to at least one tyre of an implement or trailer attached to the vehicle, in order to adjust the pressure in this tyre.

4. Apparatus according to any of claims 1 to 3, **characterized in that** the pneumatic control unit (22) is fitted stationary on the vehicle.

5. Apparatus according to any of claims 1 to 4, **characterized in that** the wheel valve device (28) is in the form of a slide valve which has at least a closed position (54'), a through-flow position (54") and a venting position (54"').

6. Apparatus according to any of claims 1 to 5, **characterized in that** the wheel valve device comprises at least one spring (56) which acts against the air pressure in the connecting line (24) and defines the switch-over pressure values for the different valve positions.

7. Apparatus according to any of claims 1 to 6, **characterized in that** the pneumatic control unit (22) includes at least one switch-over valve (46, 48) which has a venting position (49) opening the connecting line (24) to the surroundings.

8. Apparatus according to any of claims 1 to 7, **characterized in that** the pneumatic control unit (22) comprises at least one switch-over valve (46, 48) which lies between the pressure level line (25) of the control unit (22) and the connecting line (24) and which can be switched between a venting position (49) in which the connecting line (24) is vented and the pressure level line (25) is blocked, and a through-flow position (38), in which the connecting line (24) is connected to the pressure level line (25).

9. Apparatus according to any of claims 1 to 8, **characterized in that** the tyres (12, 13) of at least one axle (50, 52) of the vehicle and/or a towed implement or a trailer are each connected through associated wheel valve devices (28) and rotary through feeds (26) to a connecting line (24) associated with the axle and **in that** the connecting line (24) can be connected through an associated switch-over valve (46, 48) to a pressure level line (25) of the pneumatic control unit (22).

10. Apparatus according to any of claims 1 to 9, **characterized in that** the switch-over valves (46, 48) and/or the high pressure valve (34) and/or the medium pressure valve (40) are in the form of magnet valves, which can be controlled by an electrical or electronic unit (60).

11. Apparatus according to claim 10, **characterized in that** the switch-over valves (46, 48) and/or the high pressure valve (34) and/or the medium pressure valve (40) assume their blocking position (36) in the no-current state.

12. Apparatus according to one or more of claims 1 to 11 **characterized in that** the pressure sensor (44) is connected to the pressure level line (25) and issues the detected pressure measurement values to an electrical or electronic unit (60), which for its part effects control of the valves of the control unit (22) in dependence on the detected pressure level.

13. A method of adjusting the pressure in at least one tyre (12, 13) of a vehicle, with an apparatus according to any of claims 1 to 12, wherein an inflation pressure is applied briefly to the tyre valve device (28) and the actual pressure value (p₀) of the tyre (12, 13) in the connecting line (24) is measured, an inflation duration (t₁) or a venting duration (t₂) is then determined from a comparison between the actual pressure value (p₀) and a predeterminable set-point pressure value (p₁), and in that the inflation pressure or the venting pressure is then applied for the determined duration (t₁, t₂) to the wheel valve device (28), in order to effect inflation or venting of the tyre (12, 13), **characterized in that** the method steps are controlled by an electronic unit (60) in which an initial functional relationship between actual/set-point difference and inflation duration or venting duration (t₁, t₂) is stored and **in that** the functional relationship is changed in the light of the initial actual/set-point difference and the sum of the individual inflation durations or venting durations.

14. A method according to claim 13, **characterized in that** the method steps set forth in claim 13 are carried out repetitively until the actual pressure value (pₒ) lies within a predeterminable tolerance range (T).

## Revendications

1. Dispositif destiné au réglage de la pression dans au moins un pneu (12, 13) d'un véhicule, comportant une unité de commande pneumatique (22), un détecteur de pression (44), un arbre rotatif (26) associée au moins audit pneu (12, 13), et un dispositif de valve (28) de roue tournant avec le pneu (12, 13) pouvant être réglé dans différentes positions (54', 54'', 54'''), le dispositif (10) étant relié à une source d'air comprimé (20), et l'unité de commande (22) étant en liaison avec le dispositif de valve (28) de la roue par l'intermédiaire d'une conduite de liaison (24) et de l'arbre rotatif (26), dont la position respective (54', 54'', 54''') dépend du niveau de pression dans la conduite de liaison (24), le dispositif de valve (28) de la roue comportant au moins une position de fermeture (54'), une position de passage (54''), dans laquelle une liaison est établie entre l'unité de commande (22) et au moins ledit pneu (12, 13), ainsi qu'une position de purge (54''') ouvrant à l'air ambiant le pneu (12, 13), et le dispositif de valve (28) de la roue prenant sa position de passage (54'') dès lors qu'une pression d'admission d'air règne dans la conduite de liaison (24), sa position de purge (54''') dès lors qu'il règne dans la conduite de liaison (24) une pression de purge qui dépasse la pression d'admission d'air d'au moins une valeur prédéterminée, et sa position de fermeture dès lors qu'il règne dans la conduite de liaison (24) une pression de fermeture qui est inférieure à la pression d'admission d'air d'au moins une valeur différentielle de pression prédéterminée, **caractérisé en ce que** l'unité de commande pneumatique (22) comporte au moins une vanne haute pression (34) et une vanne moyenne pression (40), qui sont disposées dans des tronçons parallèles (30, 32) entre la source d'air comprimé (20) et une conduite de niveau de pression (25) pouvant être reliée à la conduite de liaison (24), et qui peuvent être commutées entre une position de blocage (36) et une position de passage (38), et **en ce qu'**il est prévu une vanne de réduction de pression (42) qui règle la pression d'admission d'air, au moins dans le tronçon (32) de la vanne moyenne pression (40).

2. Dispositif selon la revendication 1, **caractérisé en ce que** l'unité de commande pneumatique (22) est reliée à plusieurs pneus (12, 13), un arbre rotatif (26) et un dispositif de valve (28) de roue étant associés respectivement à chacun de ces pneus (12, 13).

3. Dispositif selon l'une des revendications 1 ou 2, **caractérisé en ce que** l'unité de commande pneumatique (22) est reliée à au moins un pneu d'un engin ou d'une remorque accroché au véhicule, afin de régler la pression dans ce pneu.

4. Dispositif selon l'une quelconque des revendications 1 à 3, **caractérisé en ce que** l'unité de commande pneumatique (22) est rapportée de façon fixe sur le véhicule.

5. Dispositif selon l'une quelconque des revendications 1 à 4, **caractérisé en ce que** le dispositif de valve (28) de roue est réalisé sous la forme d'une valve à passage direct, qui comporte au moins une position de fermeture (54'), une position de passage (54'') et une position de purge (54''').

6. Dispositif selon l'une quelconque des revendications 1 à 5, **caractérisé en ce que** le dispositif de valve de roue comporte au moins un ressort (56) qui agit à l'opposé de la pression d'air régnant dans la conduite de liaison (24), et qui définit des valeurs de pression de commutation pour les différentes positions de la valve.

7. Dispositif selon l'une quelconque des revendications 1 à 6, **caractérisé en ce que** l'unité de commande pneumatique (22) contient au moins une vanne de commutation (46, 48), qui comporte une position de purge (49) qui ouvre la conduite de liaison (24) à l'atmosphère.

8. Dispositif selon l'une quelconque des revendications 1 à 7, **caractérisé en ce que** l'unité de commande pneumatique (22) comporte au moins une vanne de commutation (46, 48), qui est située entre la conduite de niveau de pression (25) de l'unité de commande (22) et la conduite de liaison (24), et qui peut être commutée entre une position de purge (49), dans laquelle la conduite de liaison (24) est purgée et la conduite de niveau de pression (25) bloquée, et une position de passage (38), dans laquelle la conduite de liaison (24) est reliée à la conduite de niveau de pression (25).

9. Dispositif selon l'une quelconque des revendications 1 à 8, **caractérisé en ce que** les pneus (12, 13) de l'un au moins des essieux (50, 52) du véhicule et/ou d'un engin ou d'une remorque accroché, sont respectivement en liaison avec une conduite de liaison (24) affectée à l'essieu par l'intermédiaire de dispositifs de valve (28) de roue et d'arbres rotatifs (26) associés, et **en ce que** la conduite de liaison (24) peut être reliée à une conduite de niveau de pression (25) de l'unité de commande pneumatique (22) par l'intermédiaire d'une vanne de commutation (46, 48) associée.

10. Dispositif selon l'une quelconque des revendications 1 à 9, **caractérisé en ce que** les vannes de commutation (46, 48) et/ou la vanne haute pression (34) et/ou la vanne moyenne pression (40) sont réalisées sous la forme d'électrovannes, qui peuvent être commandées par une unité électrique ou électronique (60).

11. Dispositif selon la revendication 10, **caractérisé en ce que** les vannes de commutation (46, 48) et/ou la vanne haute pression (34) et/ou la vanne moyenne pression (40) prennent leur position de blocage (36) à l'état non alimenté en courant.

12. Dispositif selon l'une quelconque ou plusieurs des revendications 1 à 11, **caractérisé en ce que** le détecteur de pression (44) est raccordé à la conduite de niveau de pression (25), lequel transmet les valeurs de mesure de pression détectées à une unité électrique ou électronique (60), cette dernière procédant de son côté à une commande des vannes de l'unité de commande (22) en fonction du niveau de pression détecté.

13. Procédé destiné au réglage de la pression dans au moins un pneu (12, 13) d'un véhicule à l'aide d'un dispositif selon l'une quelconque des revendications 1 à 12, dans lequel une pression d'admission d'air est appliquée temporairement au dispositif de valve (28) de pneu, et la valeur réelle (p₀) de la pression du pneu (12, 13) étant ensuite mesurée dans la conduite de liaison (24), une durée d'admission d'air (t₁) ou une durée de purge (t₂) étant définie moyennant une comparaison entre la valeur réelle (p₀) de la pression et une valeur de consigne (p₁) de la pression pouvant être prédéterminée, et la pression d'admission d'air ou la pression de purge étant ensuite appliquée au dispositif de valve (28) de roue pendant la durée (t₁, t₂) définie afin de procéder à une admission d'air ou à une purge du pneu (12, 13), **caractérisé en ce que** les phases de procédé sont commandées par une unité électronique (60), dans laquelle est mémorisée une relation fonctionnelle initiale de la différence entre les valeurs réelle et de consigne et la durée d'admission d'air ou la durée de purge (t₁, t₂), et **en ce que** la relation fonctionnelle est modifiée en tenant compte de la différence initiale entre les valeurs réelle et de consigne et la somme des durées individuelles d'admission d'air ou des durées de purge.

14. Procédé selon la revendication 13, **caractérisé en ce que** les phases de procédé indiquées dans la revendication 13 sont exécutées à plusieurs reprises jusqu'à ce que la valeur réelle (p₀) de la pression se situe dans une plage de tolérance (T) pouvant être prédéterminée.
